(19) Europäisches Patentamt
European Patent Office
Office européen des brevets

(11) **EP 3 483 730 B1**

(12) **EUROPEAN PATENT SPECIFICATION**

(45) Date of publication and mention
of the grant of the patent:
**28.07.2021 Bulletin 2021/30**

(51) Int Cl.:
***G06F 9/50*** *(2006.01)*

(21) Application number: **17887373.3**

(22) Date of filing: **10.08.2017**

(86) International application number:
**PCT/CN2017/096785**

(87) International publication number:
**WO 2018/120845 (05.07.2018 Gazette 2018/27)**

(54) **RESOURCE ALLOCATION METHOD AND RESOURCE MANAGER**

RESSOURCENZUWEISUNGSVERFAHREN UND RESSOURCENMANAGER

PROCÉDÉ D'ATTRIBUTION DE RESSOURCES ET GESTIONNAIRE DE RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2016 CN 201611238245**

(43) Date of publication of application:
**15.05.2019 Bulletin 2019/20**

(73) Proprietor: **Huawei Technologies Co., Ltd.
Longgang District
Shenzhen, Guangdong 518129 (CN)**

(72) Inventors:
• **SHA, Ruibin**
  **Shenzhen, Guangdong 518129 (CN)**
• **GAO, Meng**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 1 696 904       CN-A- 101 051 281
CN-A- 103 729 254     CN-A- 106 681 835
US-A1- 2008 034 370   US-A1- 2016 147 648
US-B1- 6 360 263      US-B2- 7 231 504**

**Description**

**TECHNICAL FIELD**

This application relates to the field of communications technologies, and in particular, to a resource allocation method and a resource manager.

**BACKGROUND**

Software programs in various software systems usually use different types of resources, and these resources usually include process resources, memory resources, and the like. Therefore, it is necessary to manage various resources. Especially in a multi-CPU environment, whether resource management is proper and efficient directly affects performance and efficiency of an entire software system.

Currently, a resource manager is mostly used to improve resource utilization efficiency. The resource manager provides a specific quantity of resources. When an application on a CPU needs to use a resource, the CPU requests the resource manager to allocate a resource, and the resource manager allocates the resource to the CPU and identifies the allocated resource as busy. The resource identified as busy cannot be allocated again. When the application does not use the resource, the CPU returns the resource to the resource manager, and the resource manager identifies the reclaimed resource as idle. The resource identified as idle may be re-allocated.

In the multi-CPU environment, the resource manager divides resources into one global resource pool and a plurality of local resource pools. Because CPUs access the global resource pool concurrently, a CPU needs to request a lock when the CPU requests a resource in the global resource pool from the resource manager. When the resource manager allocates the resource in the global resource pool to the CPU, the resource manager identifies the allocated resource as busy, so that the allocated resource cannot be allocated again. When the CPU releases the resource, the resource manager identifies the resource released by the CPU as idle, and the resource re-participates in resource allocation. Each CPU is associated with one local resource pool. When an application on the CPU needs to use a resource, the CPU requests a resource from a local resource pool associated with the CPU, and when the application on the CPU does not need the resource, the CPU releases the resource to the local resource pool. In this way, the CPU does not need to request the resource from the global resource pool, thereby reducing locking overheads and improving performance of a resource system. When the local resource pool has no resource for allocation, the resource manager allocates a specific quantity of resources to the local resource pool from the global resource pool. After the local resource pool reclaims a specific quantity of resources, the resource manager releases the reclaimed resources to the global resource pool. A quantity of resources in the local resource pool is related to load of the CPU associated with the local resource pool. If resources reserved in the local resource pool are excessive, a quantity of resources reserved in another local resource pool is affected, and even resources in the global resource pool are insufficient, thereby directly affecting system performance and availability; if resources reserved in the local resource pool are insufficient, the CPU needs to frequently request resources from the global resource pool, thereby increasing system overheads.

When the local resource pool has no resource for allocation, the CPU requests the resource manager to allocate a fixed quantity of M resources to the local resource pool from the global resource pool once; and after M resources are reclaimed in the local resource pool, the M resources are released to the global resource pool once. When an application on a CPU needs to use few resources, M resources in a local resource pool are relatively surplus, and resource utilization is not high. An application on another CPU probably needs to use a large quantity of resources, and in this case, M resources in a local resource pool corresponding to the CPU are insufficient, and the CPU needs to request or even repeatedly request a resource from the global resource pool. Consequently, normal running of the application on the CPU is affected. Therefore, when resource load of CPUs varies significantly, some local resource pools frequently request resources from the global resource pool, and some local resource pools have idle resources, thereby affecting system performance. In addition, when resources in the global resource pool are insufficient, resources in some local resource pools are surplus, and some local resource pools have no resources available, thereby further causing resource isolation and affecting system availability.

In US 2016/147648 A1 a resource allocation method and a resource manager in a multi-CPU system are provided. The resource manager divides resources in the system into one global resource pool and at least two local resource pools, where the local resource pools are in a one-to-one correspondence with CPUs. The resource manager receives a resource application request sent by a first CPU; determines a current mode of the global resource pool; and when the global resource pool is in a centralized mode, allocates a resource to the first CPU from the global resource pool, where when the global resource pool is in the centralized mode, allocatable resources are in the global resource pool. When there is a shortage of resources, the resource manager gathers, in the global resource pool, allocatable resources in the system. In this way, when CPUs request resources, the resource manager can allocate resources all from the global resource pool, so as to improve system resource utilization efficiency.

In US 2008/034370 A1 a technique for managing application workloads in a data processing system includes establishing a reserve resource allocation of a data processing resource for use by a data processing application having a need to utilize the resource, sharing a portion of the resource that is not part of the reserve resource allocation or otherwise utilized by the application with other applications, allowing the application to consume the reserve resource allocation when the application desires to increase its utilization of the resource, and replenishing the reserve resource allocation from the sharable portion of the resource as the application consumes the reserve resource allocation. Advantageously, the reserve resource allocation can be effectively managed so that the data processing resource is available to the application in order to reduce application latency without depriving other applications of the ability to use the resource.

US 7,231504 B2 describes a method, system, and program for dynamic memory management of unallocated memory in a logical partitioned data processing system. A logical partitioned data processing system typically includes multiple memory units, processors, I/O adapters, and other resources enabled for allocation to multiple logical partitions. A partition manager operating within the data processing system manages allocation of the resources to each logical partition. In particular, the partition manager manages allocation of a first portion of the multiple memory units to at least one logical partition. In addition, the partition manager manages a memory pool of unallocated memory from among the multiple memory units. Responsive to receiving a request for a memory loan from one of the allocated logical partitions, a second selection of memory units from the memory pool is loaned to the requesting logical partition. The partition manager, however, is enabled to reclaim the loaned selection of memory units from the requesting logical partition at any time.

## SUMMARY

This application provides a resource allocation method and a resource manager. A mode of a global resource pool is adjusted based on a usage status of resources in a system, and a manner of allocating a resource to a CPU is determined based on the mode of the global resource pool. By using the resource allocation method provided in this application, resource allocation flexibility can be improved, resources can be allocated properly under different load pressures, and resource utilization can be improved.

According to a first aspect, a resource manager in a multi-CPU system is provided. The resource manager divides resources in the system into one global resource pool and at least two local resource pools, where the local resource pools are in a one-to-one correspondence with CPUs, and the resource manager is configured to: receive a resource application request sent by a first CPU; determine a current mode of the global resource pool; and when the global resource pool is in a centralized mode, allocate a resource to the first CPU from the global resource pool, where when the global resource pool is in the centralized mode, allocatable resources are in the global resource pool.

In this embodiment of this application, the global resource pool may be in different modes based on load pressures of the system. When there is a shortage of resources, the resource manager gathers, in the global resource pool, the allocatable resources in the system. In this way, when CPUs request resources, the resource manager can allocate resources all from the global resource pool, so as to improve utilization efficiency of system resources.

In a possible design, the resource manager is further configured to: when the global resource pool is in a distributed mode, allocate a resource to the first CPU from a first local resource pool corresponding to the first CPU, where when the global resource pool is in the distributed mode, the first local resource pool has an allocatable resource.

For different pressures in the system, the global resource pool is in different modes. When the resources in the system are sufficient, an allocatable resource may be reserved in the local resource pool to increase a response speed of the system and increase flexibility of the system.

In a possible design, the resource manager is further configured to: when the allocatable resource in the first local resource pool cannot meet a requirement of the first CPU, allocate a resource to the first local resource pool from the global resource pool, and then allocate a resource to the first CPU from the first local resource pool.

When the resources in the system are sufficient and there is a shortage of resources in the local resource pool, the resource manager may allocate a resource to the local resource pool from the global resource pool. In this way, the resource manager is applicable to different load pressures of the local resource pool, so as to improve system resource utilization.

In a possible design, the resource manager is further configured to: monitor a usage status of resources in the global resource pool; and when a quantity of allocatable resources in the global resource pool is less than a preset threshold, set the global resource pool to the centralized mode, reclaim unallocated resources in the at least two local resource pools in the system, and place the unallocated resources in the global resource pool.

The resource manager further needs to monitor the usage status of the resources in the global resource pool. When the resources are insufficient, an allocatable resource is reclaimed from the local resource pool to avoid a case in which some local resource pools have remaining resources while some local resource pools have no resource available, thereby improving the system resource utilization and improving availability of the system.

In a possible design, the resource manager is further configured to: monitor a usage status of resources in the local resource pool; and when a quantity of allocatable resources in the local resource pool is less than a preset value and when the global resource pool is in the distributed mode, allocate resources to the at least two local resource pools from the global resource pool.

In a possible design, the resource manager is further configured to: when a quantity of allocatable resources in the local resource pool is greater than a preset value, reclaim some resources of the allocatable resources in the local resource pool, and place the resources in the global resource pool.

The resource manager may further monitor the usage statuses of resources in the global resource pool and the local resource pool, actively allocate resources from the global resource pool to the local resource pool, or reclaim a resource from the local resource pool and place the resource in the global resource pool, so as to adapt to different load statuses and improve a usage rate of system resources.

In a possible design, the resource manager determines a quantity of allocated resources or a quantity of reclaimed resources according to a resource balancing algorithm.

In the resource balancing algorithm, a quantity of resources allocated by the resource manager to a local resource pool from the global resource pool or a quantity of resources reclaimed from the local resource pool may be calculated based on a current resource usage status. In this way, when the resource manager adjusts resource distribution, a quantity of adjusted resources may be adjusted based on different load of the system, thereby improving utilization of the resources in the system. According to a second aspect, a resource allocation method in a multi-CPU system is provided, where the multi-CPU system includes a resource manager. The resource manager divides resources in a system into one global resource pool and at least two local resource pools, where the local resource pools are in a one-to-one correspondence with CPUs, and the method includes: receiving, by the resource manager, a resource application request sent by a first CPU; determining a current mode of the global resource pool; and when the global resource pool is in a centralized mode, allocating a resource to the first CPU from the global resource pool, where when the global resource pool is in the centralized mode, allocatable resources are in the global resource pool.

In a possible design, when the global resource pool is in a distributed mode, the resource manager allocates a resource to the first CPU from a first local resource pool corresponding to the first CPU, where when the global resource pool is in the distributed mode, the first local resource pool has an allocatable resource.

In a possible design, when the allocatable resource in the first local resource pool cannot meet a requirement of the first CPU, the resource manager allocates a resource to the first local resource pool from the global resource pool, and then allocates a resource to the first CPU from the first local resource pool.

In a possible design, the resource manager monitors a usage status of resources in the global resource pool; and when a quantity of allocatable resources in the global resource pool is less than a preset threshold, the resource manager sets the global resource pool to the centralized mode, reclaims an unallocated resource in the local resource pool in the system, and places the unallocated resource in the global resource pool.

In a possible design, the resource manager monitors a usage status of resources in the local resource pool; and when a quantity of allocatable resources in the local resource pool is less than a preset value and when the global resource pool is in the distributed mode, the resource manager allocates a resource to the local resource pool from the global resource pool.

In a possible design, when a quantity of allocatable resources in the local resource pool is greater than a preset value, the resource manager reclaims some resources of the allocatable resources in the at least two local resource pools, and places the resources in the global resource pool.

In a possible design, the resource manager determines a quantity of allocated resources or a quantity of reclaimed resources according to a resource balancing algorithm.

According to a third aspect, a resource manager in a multi-CPU system is provided, where the resource manager includes a processor, a communications bus, a memory, and a communications interface, and the processor is configured to execute the foregoing resource allocation method, and details are not described herein again.

In addition, for technical effects brought by any design manner of the second aspect and the third aspect, refer to the technical effects brought by different design manners of the first aspect. Details are not described herein again.

## BRIEF DESCRIPTION OF DRAWINGS

To describe the technical solutions in the embodiments of the present invention more clearly, the following briefly describes the accompanying drawings required for describing the embodiments.

FIG. 1 is a schematic structural diagram of a resource allocation system according to the present invention;
FIG. 2A is a schematic flowchart of a resource allocation method according to an embodiment of the present invention;
FIG. 2B is another schematic flowchart of a resource allocation method according to an embodiment of the present invention; and

FIG. 3 is a schematic structural diagram of a resource manager according to an embodiment of the present invention.

## DESCRIPTION OF EMBODIMENTS

The embodiments of the present invention provide a resource allocation method and system, and a resource manager in a multi-CPU system, and the resource allocation method and system, and the resource manager in the multi-CPU system can automatically adapt to a change in load on a CPU in the multi-CPU system, allocate a resource properly, improve system resource utilization, and improve system resource allocation and recycling performance, thereby improving performance and availability of the emtire system.

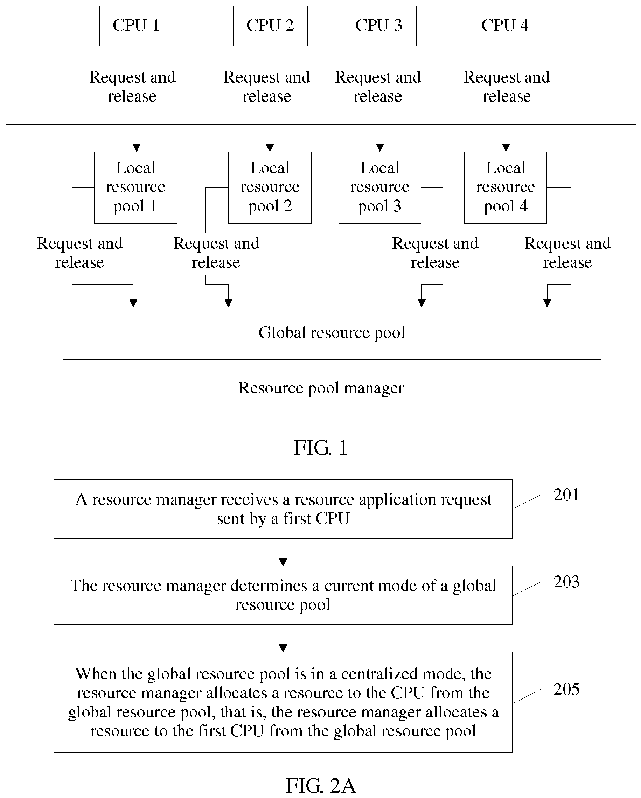

In the embodiments of the present invention, a resource is a resource allocated to an application on each CPU for use, such as a process resource, a memory resource, and the like. A structure of the resource allocation system in the embodiments of the present invention is shown in FIG. 1.

As shown in FIG. 1, a resource manager divides resources into one global resource pool and at least two local resource pools and is responsible for monitoring and managing a resource usage status. The local resource pools are in a one-to-one correspondence with CPUs. For example, a local resource pool 1 corresponds to a CPU 1, and a local resource pool 2 corresponds to a CPU 2, and so on. In FIG. 1, four CPUs and four local resource pools are provided as examples merely. In actual use, a quantity of CPUs and a quantity of corresponding local resource pools may be set based on a requirement.

The resource allocation method provided in the embodiments of the present invention is described in detail in the following, as shown in FIG. 2A.

Step 201: A resource manager receives a resource application request sent by a first CPU.

When an application on a CPU needs to use a resource, the CPU sends a resource application request to the resource manager to request to allocate a resource. As an example for description, in this embodiment of the application, the resource manager receives the resource application request sent by the first CPU.

Step 203: The resource manager determines a current mode of a global resource pool. Step 205 or 207 continues to be performed.

In this embodiment of the present invention, the resource manager sets two modes for the global resource pool. One mode is a centralized mode, and the other mode is a distributed mode.

The resource manager monitors a usage status of resources in the global resource pool. When a quantity of allocatable resources in the global resource pool is less than a preset threshold, the resource manager sets the global resource pool to the centralized mode, reclaims unallocated resources in all local resource pools in a system, and places the unallocated resources in the global resource pool, so that remaining resources in the system are gathered in the global resource pool. In this embodiment of the present invention, a mode of the global resource pool in this state is referred to as the centralized mode.

When the quantity of allocatable resources in the global resource pool is greater than the preset threshold, the resource manager allocates a specific quantity of resources to a local resource pool, and in this case, remaining resources in the system are distributed in the global resource pool and the local resource pool. In this embodiment of the present invention, a mode of the global resource pool in this state is referred to as the distributed mode. The quantity of resources allocated by the resource manager to the local resource pool may be calculated by using a resource balancing algorithm provided in this embodiment of the present invention, and the resource balancing algorithm is described in the following.

The preset threshold herein is set based on load and a service type of the system, and is not limited in this embodiment of the present invention.

The usage status of the resources in the global resource pool may be determined based on a usage rate of the resources in the global resource pool. When the usage rate of the resources is greater than a preset threshold, the resource manager sets the global resource pool to the centralized mode, reclaims unallocated resources in all the local resource pools in the system, and places the unallocated resources in the global resource pool. When the usage rate of the resources in the global resource pool is less than the preset threshold, the resource manager allocates a specific quantity of resources to the local resource pool, and in this case, remaining resources in the system are distributed in the global resource pool and the local resource pool. Similarly, the threshold in this case may also be set based on an actual requirement. Step 205: When the global resource pool is in a centralized mode, the resource manager allocates a resource to the CPU from the global resource pool, that is, the resource manager allocates a resource to the first CPU from the global resource pool. It has been described in the above that when the global resource pool is in the centralized mode, the resource manager reclaims the unallocated resources in all the local resource pools in the system, and places the unallocated resources in the global resource pool. In this case, there is no resource for allocation in the local resource pools. In other words, when the global resource pool is in the centralized mode, allocatable resources in the system are all in the global resource pool. Therefore, the resource manager allocates the resource to the first CPU from the global resource pool. A quantity of resources allocated by the resource manager to the first CPU from the global resource pool may be calculated by using the resource balancing algorithm provided in this embodiment of the present invention.

After the resource allocated by the resource manager is received, the application on the CPU may run.

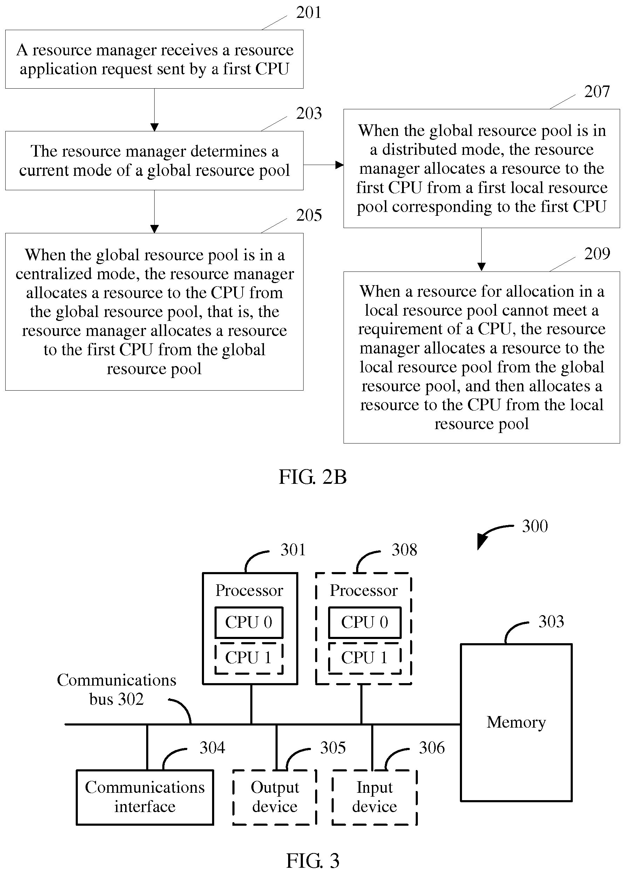

In addition to the foregoing steps, another embodiment of the present invention may further include the following steps, as shown in FIG. 2B. Step 207: When the global resource pool is in a distributed mode, the resource manager allocates a resource to the first CPU from a first local resource pool corresponding to the first CPU.

When the global resource pool is in the distributed mode, a local resource pool has an allocatable resource. When a quantity of allocatable resources in the global resource pool is greater than a preset threshold, the global resource pool has a relatively large quantity of allocatable resources, and each local resource pool has an allocatable resource. Therefore, when a CPU requests a resource, the resource manager allocates a resource to the CPU from a local resource pool corresponding to the CPU. A quantity of resources allocated by the resource manager to the first CPU from the first local resource pool corresponding to the first CPU may be calculated by using a resource balancing algorithm provided in this embodiment of the present invention.

In this case, the allocatable resource in the local resource pool probably cannot meet a requirement of the CPU. In this case, step 209 is performed.

Step 209: When an allocatable resource in a local resource pool cannot meet a requirement of a CPU, the resource manager allocates a resource to the local resource pool from the global resource pool, and then allocates a resource to the CPU from the local resource pool.

When the allocatable resource in the local resource pool cannot meet the requirement of the CPU, the resource manager allocates a specific quantity of resources to the local resource pool from the global resource pool, and then allocates the resource to the CPU from the local resource pool. The quantity of resources allocated by the resource manager to the local resource pool from the global resource pool may be calculated by using the resource balancing algorithm provided in this embodiment of the present invention. The resource balancing algorithm is described in detail in the following and is not described in this step.

When the allocatable resource in the local resource pool can meet the requirement of the CPU, the resource manager may allocate a resource to the CPU from the local resource pool.

In this embodiment of the present invention, when an allocatable resource in the first local resource pool cannot meet a requirement of the first CPU, the resource manager allocates a resource to the first local resource pool from the global resource pool, and then allocates a resource to the first CPU from the first local resource pool. Optionally, this embodiment of the present invention may further include the following step:

the resource manager monitors a usage status of resources in the global resource pool, and when a quantity of allocatable resources in the global resource pool is less than a preset threshold, the resource manager sets the global resource pool to a centralized mode, reclaims an unallocated resource in the local resource pool in the system, and places the unallocated resource in the global resource pool; or

when a usage rate of resources in the global resource pool is greater than a preset threshold, the resource manager sets the global resource pool to a centralized mode, reclaims an unallocated resource in the local resource pool in the system, and places the unallocated resource in the global resource pool.

In this embodiment of the present invention, in order to improve resource allocation efficiency, it is ensured that a resource can be allocated from the global resource pool when the local resource pool needs the resource. Therefore, when the quantity of allocatable resources in the global resource pool is less than the preset threshold or the usage rate of the resources in the global resource pool is greater than a threshold, the resource manager needs to reclaim the unallocated resource in the local resource pool in the system, and place the unallocated resource in the global resource pool for management and allocation at the same location.

Optionally, the method may further include the following step:
the resource manager monitors a usage status of resources in the local resource pool, and when the quantity of allocatable resources in the local resource pool is less than a preset value, and when the global resource pool is in the distributed mode, the resource manager allocates a resource to the local resource pool from the global resource pool.

In this embodiment of the present invention, the resource manager may further monitor the usage status of the resources in the local resource pool in the system. When the global resource pool is in the distributed mode and the quantity of allocatable resources in the local resource pool is less than a specific quantity, the resource manager may actively allocate a resource to the local resource pool. The quantity of resources allocated by the resource manager to the local resource pool from the global resource pool may be calculated by using the resource balancing algorithm provided in this embodiment of the present invention.

In this way, the allocatable resources in the local resource pool can be sufficient. When an application on the CPU corresponding to the local resource pool needs to use a resource, a resource may be directly allocated for the application on the CPU from the local resource pool, thereby improving efficiency.

Optionally, this embodiment of the present invention may further include the following step:
when the quantity of allocatable resources in the local resource pool is greater than the preset value, the resource manager reclaims some resources of the allocatable resources in the local resource pool, and places the resources in the global resource pool.

When the quantity of allocatable resources in the local resource pool is greater than a specific value and the allocatable resources in the local resource pool are surplus, the resource manager reclaims some of the allocatable resources, and places the resources in the global resource pool. In this way, when a local resource pool needs a resource, the resource manager can allocate a resource to the local resource pool from the global resource pool. The preset value of the quantity of allocatable resources in the local resource pool is set based on a service requirement, and is not limited in this embodiment of the present invention.

A quantity of resources reclaimed by the resource manager from the local resource pool may be calculated by using the resource balancing algorithm provided in this embodiment of the present invention. Alternatively, a quantity of allocatable resources that is obtained by subtracting the preset value from a quantity of all the allocatable resources in the local resource pool may be reclaimed. Alternatively, a fixed quantity of allocatable resources in the local resource pool may be reclaimed.

The resource manager may set a minimum quantity of reserved resources for each local resource pool, or may not reserve any resource for the local resource pool, and this may be determined based on a specific service and a requirement.

This embodiment of the present invention provides an idea of a resource allocation method. It may be understood that, in actual application, the resource manager may also manage local resource pools for different services. In this way, the local resource pools correspond to the services in the system, and allocation of resources by the resource manager is consistent with the idea of the resource allocation method provided in this embodiment of the present invention, and this is not described separately.

In this embodiment of the present invention, the resource balancing algorithm is provided, and the resource balancing algorithm is used to determine a quantity of allocated resources when the resource manager allocates a resource to a local resource pool from a global resource pool, or may be used to determine a quantity of reclaimed resources when the resource manager reclaims an allocatable resource in the local resource pool. Determining an appropriate quantity of allocated resources and an appropriate quantity of reclaimed resources can minimize a time for responding to the CPU. Therefore, when the resource manager allocates a resource to a local resource pool and reclaims a resource from a local resource pool, the resource balancing algorithm needs to be used to calculate the quantity of allocated resources or the quantity of reclaimed resources.

Parameters involved in the resource balancing algorithm are as follows:

A sampling period T: The sampling period may also be referred to as sampling duration, and allocation of resources in a local resource pool is monitored in the sampling period. A specific value may be set by a user based on a requirement. Generally, in order to respond to a resource application request of a CPU in time, the sampling period is not set to be excessive long, and may be set within an acceptable range of the user.

A time $a_n$ consumed by the CPU for requesting a resource in an $n^{th}$ sampling period: duration consumed by the CPU from requesting a resource to obtaining an allocated resource in the sampling period. This value is subject to measured data.

A sampling window size m: a quantity of sampling periods in a continuous sampling time. This value is set by the user based on a requirement.

A weight r (0 < r < 1) for calculating a time consumed by a CPU for requesting a resource: a weight for calculating a time consumed by each resource application request for requesting a resource in a continuous sampling period. The weight is set based on a requirement of the user. Generally, when recently sampled data is more trusted, a weight for calculating a time consumed is larger.

Duration t consumed by a CPU for requesting a lock of a resource in a sampling period: This value is subject to measured data. To avoid a resource conflict, a lock is used in this embodiment of the present invention, and a specific implementation is the same as that in the prior art. A new lock technology may also be used, provided that a resource allocation conflict can be avoided. This is not further described in the present invention.

In the resource balancing algorithm provided in this embodiment of the present invention, an intermediate variable: a weighted time Sn consumed by a resource application request for requesting a resource in sampling duration needs to be calculated first.

According to a convolution calculation formula $x(n) * h(n) = \sum_{m=-\infty}^{\infty} x(m)h(h-m),$ the following method for calculating Sn may be obtained:

$$S_n = (1-r) * (a_n + ra_{n-1} + r^2 a_{n-2} + r^3 a_{n-3} + \cdots + r^{m-1} a_{n-m+1}$$

$$S_{n+1} = (1 - r) * (a_{n+1} + ra_n + r^2 a_{n-1} + r^3 a_{n-2} + \cdots + r^{m-1} a_{n-m+2}$$

$$= (1 - r)\left(a_{n+1} + r\left[{S_n}/{(1 - r)} + r^{m-2} a_{n-m+2}\right]\right)$$

$$S_{n+1} \approx (1 - r)a_{n+1} + rS_n$$

A quantity K of resources that are allocated to a local resource pool in the sampling duration may be obtained according to a return on investment ratio model. According to the return on investment ratio model: $(K_{n+1} - K_n)/(T/_{(T-t)} S_n - S_n) = (K_n - K_{n-1})/(S_n - S_{n-1})$, $K_{n+1} = (K_n - K_{n-1})/(S_n - S_{n-1}) * (T/_{(T-t)} S_n - S_n) + K_n$.

Note: The time weighted consumption generated by a resource user in a first sampling window is $S_1=0$; and a quantity of resources allocated in a zeroth sampling window is Ki=0, and a quantity of resources allocated in the first sampling window is K2=0.

By using the resource balancing algorithm provided in this embodiment of the present invention, the resource manager calculates, based on a specified time period, a quantity of resources to-be-allocated to each local resource pool. When a resource needs to be allocated to a local resource pool, for example, when an allocatable resource in the local resource pool cannot meet a requirement of a CPU, the resource manager allocates a resource to the local resource pool based on a current quantity of resources to-be-allocated to the local resource pool. When a quantity of allocatable resources in the local resource pool is greater than the preset value, and when the resource manager needs to reclaim a resource from the local resource pool, a quantity of reclaimed resources may also be determined according to the resource balancing algorithm.

The embodiments of this application further provide a resource manager, configured to manage resources in a multi-CPU system. The resource manager divides the resources in the system into one global resource pool and at least two local resource pools, and the at least two local resource pools are in a one-to-one correspondence with CPUs, as shown in FIG. 1.

The resource manager is configured to: receive a resource application request sent by a first CPU; determine a current mode of the global resource pool; and when the global resource pool is in a centralized mode, allocate a resource to the first CPU from the global resource pool, where when the global resource pool is in the centralized mode, allocatable resources in the system are in the global resource pool.

The resource manager is further configured to: when the global resource pool is in a distributed mode, allocate a resource to the first CPU from a first local resource pool corresponding to the first CPU, where when the global resource pool is in the distributed mode, the first local resource pool has an allocatable resource.

The resource manager is further configured to: when the allocatable resource in the first local resource pool cannot meet a requirement of the first CPU, allocate a resource to the first local resource pool from the global resource pool, and then allocate a resource to the first CPU from the first local resource pool.

When allocating a resource to the local resource pool from the global resource pool, the resource manager may determine a quantity of allocated resources according to the foregoing resource balancing algorithm, which is not described herein again. The resource balancing algorithm provided in this embodiment of this application may be adjusted based on load of the CPU, and allocation and usage statuses of resources in the system. Therefore, a quantity of resources allocated by the resource manager to the local resource pool may vary from time to time, thereby improving availability of the system resources.

The resource manager is further configured to: monitor a usage status of resources in the global resource pool; and when a quantity of allocatable resources in the global resource pool is less than a preset threshold, set the global resource pool to the centralized mode, reclaim an unallocated resource in the local resource pool in the system, and place the unallocated resource in the global resource pool.

When the resource manager needs to reclaim a resource in the local resource pool, a quantity of reclaimed resources may also be determined according to the foregoing resource balancing algorithm. The quantity of reclaimed resources that is determined by the resource manager according to the resource balancing algorithm may dynamically change, so as to better adapt to a change of a requirement of the CPU in the system and improve flexibility of system resource application.

The resource manager is further configured to: monitor a usage status of resources in the local resource pool; and when a quantity of allocatable resources in the local resource pool is less than a preset value and when the global resource pool is in the distributed mode, allocate the resource to the local resource pool from the global resource pool.

The resource manager is further configured to: when the quantity of allocatable resources in the local resource pool is greater than the preset value, reclaim some resources of the allocatable resources in the at least two local resource pools, and place the resources in the global resource pool.

According to the resource manager provided in this embodiment of this application, dynamic adjustment may be performed based on a usage status of resources in the system. When the allocatable resources in the global resource pool are insufficient, the allocatable resource in the local resource pool is reclaimed and placed in the global resource pool for allocation and management at the same location. When allocatable resources in the global resource pool are excessive, a resource can be allocated to a local resource pool by using a resource balancing mechanism, so as to respond to a requirement of a CPU more quickly.

With reference to units and algorithm steps of each example described in the embodiments disclosed in this application, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 3 is a schematic diagram of a hardware structure of a resource manager according to an embodiment of this application. The resource manager 300 includes at least one processor 301, a communications bus 302, a memory 303, and at least one communications interface 304.

The processor 301 may be a central processing unit (Central Processing Unit, CPU), a microprocessor, an application-specific integrated circuit (Application-Specific Integrated Circuit, ASIC), or one or more integrated circuits configured to control program execution of the solution in this application.

The communications bus 302 may include a channel in which information is transmitted between the foregoing components.

The communications interface 304 may be any apparatus like a transceiver, and is configured to communicate with another device or communications network, such as the Ethernet, a radio access network (RAN), a wireless local area network (WLAN), or the like.

The memory 303 may be a read-only memory (ROM) or another type of static storage device capable of storing static information and a static instruction, or a random access memory (RAM) or another type of dynamic storage device capable of storing information and an instruction, or may be an electrically erasable programmable read-only memory (EEPROM), a compact disc read-only memory (CD-ROM), or another compact disc storage, an optical disc storage (including a compressed optical disc, a laser disc, an optical disc, a digital versatile disc, a Blu-ray optical disc, and the like), a disk storage medium, another magnetic storage device, or any other medium capable of carrying or storing expected program code in a form of an instruction or a data structure and capable of being accessed by a computer, but is not limited thereto. A memory may exist independently and is connected to a processor by using a bus. The memory may also be integrated with the processor.

The memory 303 is configured to store application program code that executes the solution in this application, and the processor 301 controls execution of the solution in this application. The processor 301 is configured to execute the application program code stored in the memory 303, so as to implement a resource allocation method in a multi-CPU system in the foregoing embodiment.

In a specific implementation, as an embodiment, the processor 301 may include one or more CPUs, for example, a CPU 0 and a CPU 1 in FIG. 3.

In a specific implementation, as an embodiment, the resource manager 300 may include a plurality of processors, for example, the processor 301 and a processor 308 in FIG. 3. Each of these processors may be a single-core processor or may be a multi-core processor. The processor herein may be one or more devices, circuits, and/or power processor units configured to process data (for example, a computer program instruction).

In a specific implementation, as an embodiment, the resource manager 300 may further include an output device 305 and an input device 306. The output device 305 communicates with the processor 301, and may display information in a plurality of manners. For example, the output device 305 may be a liquid crystal display (LCD), a light emitting diode (LED) display device, a cathode-ray tube (CRT) display device, a projector, or the like. The input device 306 communicates with the processor 301, and may receive an input of a user in a plurality of manners. For example, the input device 306 may be a mouse, a keyboard, a touchscreen device, or a sensing device.

The resource manager 300 may be a general server unit or a dedicated server. In specific implementation, the resource manager 300 may be a desktop, a portable computer, a network server, a palmtop computer (PDA), a mobile phone, a tablet, a wireless terminal device, a communications device, an embedded device, or a device having a similar structure in FIG. 3. A type of the resource manager 300 is not limited in this embodiment of this application.

Because the resource manager provided by this embodiment of this application may be configured to perform the foregoing resource allocation method in the multi-CPU system, for a technical effect that can be obtained by the resource manager, refer to the foregoing method embodiment. Details are not described again herein.

The embodiments of the present invention further provide a computer storage medium, configured to store a computer software instruction used by the resource manager, and the computer software instruction includes a program designed for executing the foregoing method embodiment. By executing a stored program, the resource allocation method can be implemented in the multi-CPU system.

The embodiments of this application further provide a computer program, and the computer program includes an instruction. When the computer program is executed by a computer, the computer can perform the procedure in the foregoing method embodiment.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, the word "comprises" does not exclude other components or steps, and "a" or "one" does not exclude a plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), or a computer program product. Therefore, this application may use a form of hardware only embodiments, software only embodiments, or embodiments with a combination of software and hardware. Moreover, this application may use a form of a computer program product that is implemented on one or more computer usable storage media (including but not limited to a disk memory, a CD-ROM, an optical memory, and the like) that include computer usable program code. The computer program is stored/distributed in a proper medium and is provided as or used as a part of the hardware together with another hardware, or may be distributed in another form, for example, by using the Internet or another wired or wireless telecommunications system.

This application is described with reference to the flowcharts and/or block diagrams of the method, the apparatus (device), and the computer program product of the embodiment of this application according to this application. It should be understood that the computer program instructions may be used to implement each process and/or each block in the flowcharts and/or the block diagrams, and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instruction executed by the computer or the processor of any other programmable data processing device generates an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1. A resource manager in a multi-CPU system, wherein the resource manager divides resources in the system into one global resource pool and at least two local resource pools, the at least two local resource pools are in a one-to-one correspondence with CPUs, and the resource manager is configured to:

   receive a resource application request sent by a first CPU;
   determine a current mode of the global resource pool; and
   when the global resource pool is in a centralized mode, allocate a resource to the first CPU from the global resource pool, wherein when the global resource pool is in the centralized mode, allocatable resources in the system are in the global resource pool;
   wherein the resource manager is further configured to:

   monitor a usage status of resources in the global resource pool; and
   when a quantity of allocatable resources in the global resource pool is less than a preset threshold, set the global resource pool to the centralized mode, reclaim unallocated resources in the at least two local resource pools in the system, and place the unallocated resources in the global resource pool; and
   when the quantity of allocatable resources in the global resource pool is greater than the preset threshold, set the global resource pool to the distributed mode, wherein the resource manager allocates a specific quantity of resources to a local resource pool, so that remaining resources in the system are distributed in the global resource pool and the local resource pool;

wherein the resource manager is further configured to:

when the global resource pool is in a distributed mode, allocate a resource to the first CPU from a first local resource pool corresponding to the first CPU, wherein when the global resource pool is in the distributed mode, the first local resource pool has an allocatable resource;
wherein the resource manager is configured to determine a quantity of allocated resources or a quantity of reclaimed resources according to a resource balancing algorithm;

wherein in the resource balancing algorithm a quantity K of resources that are allocated to a local resource pool in the sampling duration is obtained according to a return on investment ratio model, the return on investment ratio model being:

$$K_{n+1} = (K_n - K_{n-1})/(S_n - S_{n-1}) * (^T\!/_{(T-t)} S_n - S_n) + K_n;$$

wherein Sn is a weighted time consumed by a resource application request for requesting a resource in sampling duration and obtained using the formula:

$$S_{n+1} = (1-r)(a_{n+1} + r\left[^{S_n}\!/_{(1-r)} + r^{m-2} a_{n-m+2}\right]);$$

and wherein:

allocation of resources in a local resource pool is monitored by the resource manager in a sampling period T, the sampling period T being set by a user based on a requirement;
an is a time consumed by the CPU for requesting a resource in an $n^{th}$ sampling period; m is a sampling window size, the sampling window size is a quantity of sampling periods in a continuous sampling time, the sampling window size m is set by the user based on a requirement;
r is a weight for calculating a time consumed by each resource application request for requesting a resource in a continuous sampling period, wherein r has a value of 0< r < 1, the weight r is set based on a requirement of the user such that when a recently sampled data is more trusted, a weight for calculating a time consumed is larger;
t is a duration consumed by a CPU for requesting a lock of a resource in a sampling period; and
the time weighted consumption generated by a resource user in a first sampling window is $S_1$=0; and a quantity of resources allocated in a zeroth sampling window is $K_1$=0, and a quantity of resources allocated in the first sampling window is K2=0.

2. The resource manager according to claim 1, wherein the resource manager is further configured to:
when the allocatable resource in the first local resource pool cannot meet a requirement of the first CPU, allocate a resource to the first local resource pool from the global resource pool, and then allocate a resource to the first CPU from the first local resource pool.

3. The resource manager according to any one of claims 1 to 2, wherein the resource manager is further configured to:

monitor a usage status of resources in the at least two local resource pools; and
when quantities of allocatable resources in the at least two local resource pools are less than a preset value and when the global resource pool is in the distributed mode, allocate resources to the at least two local resource pools from the global resource pool.

4. The resource manager according to any one of claims 1 to 2, wherein the resource manager is further configured to:
when quantities of allocatable resources in the at least two local resource pools are greater than a preset value, reclaim some resources of the allocatable resources in the at least two local resource pools, and place the resources in the global resource pool.

5. A resource allocation method in a multi-CPU system, wherein the multi-CPU system comprises a resource manager, and the resource manager divides resources in the system into one global resource pool and at least two local resource pools, the at least two local resource pools are in a one-to-one correspondence with CPUs, and the method comprises:

receiving (201), by the resource manager, a resource application request sent by a first CPU;

determining (203), by the resource manager, a current mode of the global resource pool; and

when the global resource pool is in a centralized mode, allocating (205), by the resource manager, a resource to the first CPU from the global resource pool, wherein when the global resource pool is in the centralized mode, allocatable resources in the system are in the global resource pool;

monitoring, by the resource manager, a usage status of resources in the global resource pool; and

when a quantity of allocatable resources in the global resource pool is less than a preset threshold, setting, by the resource manager, the global resource pool to the centralized mode, reclaiming unallocated resources in the at least two local resource pools in the system, and placing the unallocated resources in the global resource pool; and

when the quantity of allocatable resources in the global resource pool is greater than the preset threshold, set the global resource pool to the distributed mode, wherein the resource manager allocates a specific quantity of resources to a local resource pool, so that remaining resources in the system are distributed in the global resource pool and the local resource pool;

wherein the method further comprises:

when the global resource pool is in a distributed mode, allocating (207), by the resource manager, a resource to the first CPU from a first local resource pool corresponding to the first CPU, wherein when the global resource pool is in the distributed mode, the first local resource pool has an allocatable resource;

determining, by the resource manager, a quantity of allocated resources or a quantity of reclaimed resources according to a resource balancing algorithm;

wherein in the resource balancing algorithm a quantity K of resources that are allocated to a local resource pool in the sampling duration is obtained according to a return on investment ratio model, the return on investment ratio model being:

$$K_{n+1} = (K_n - K_{n-1})/(S_n - S_{n-1}) * (^T/_{(T-t)} S_n - S_n) + K_n;$$

wherein Sn is a weighted time consumed by a resource application request for requesting a resource in sampling duration and obtained using the formula:

$$S_{n+1} = (1 - r)\left(a_{n+1} + r\left[^{S_n}/_{(1-r)} + r^{m-2}a_{n-m+2}\right]\right);$$

and wherein:

allocation of resources in a local resource pool is monitored by the resource manager in a sampling period T, the sampling period T being set by a user based on a requirement;

an is a time consumed by the CPU for requesting a resource in an $n^{th}$ sampling period;

m is a sampling window size, the sampling window size is a quantity of sampling periods in a continuous sampling time, the sampling window size m is set by the user based on a requirement;

r is a weight for calculating a time consumed by each resource application request for requesting a resource in a continuous sampling period, wherein r has a value of 0< r < 1, the weight r is set based on a requirement of the user such that when a recently sampled data is more trusted, a weight for calculating a time consumed is larger;

t is a duration consumed by a CPU for requesting a lock of a resource in a sampling period; and

the time weighted consumption generated by a resource user in a first sampling window is $S_1 = 0$; and a quantity of resources allocated in a zeroth sampling window is $K_1 = 0$, and a quantity of resources allocated in the first sampling window is K2=0.

**6.** The method according to claim 5, wherein the method further comprises:
when the allocatable resource in the first local resource pool cannot meet a requirement of the first CPU, allocating (209), by the resource manager, a resource to the first local resource pool from the global resource pool, and then allocating a resource to the first CPU from the first local resource pool.

**7.** The method according to any one of claims 5 to 6, wherein the method further comprises:

monitoring, by the resource manager, a usage status of resources in the at least two local resource pools; and when quantities of allocatable resources in the at least two local resource pools are less than a preset value and when the global resource pool is in the distributed mode, allocating, by the resource manager, resources to the at least two local resource pools from the global resource pool.

**8.** The method according to any one of claims 5 to 6, wherein the method further comprises:
when quantities of allocatable resources in the at least two local resource pools are greater than a preset value, reclaiming, by the resource manager, some resources of the allocatable resources in the at least two local resource pools, and placing the resources in the global resource pool.


**Patentansprüche**

**1.** Ressourcenmanager in einem Multi-CPU-System, wobei der Ressourcenmanager Ressourcen im System in einen globalen Ressourcenpool und mindestens zwei lokale Ressourcenpools aufteilt, die mindestens zwei lokalen Ressourcenpools in einer Eins-zu-Eins-Entsprechung mit CPUs stehen und der Ressourcenmanager für folgende Vorgänge ausgelegt ist:

Empfangen einer Ressourcenanwendungsanforderung, die von einer ersten CPU gesendet wird;
Bestimmen eines aktuellen Modus des globalen Ressourcenpools; und
wenn sich der globale Ressourcenpool in einem zentralisierten Modus befindet, Zuweisen einer Ressource aus dem globalen Ressourcenpool an die erste CPU, wobei, wenn sich der globale Ressourcenpool im zentralisierten Modus befindet, zuweisbare Ressourcen im System sich im globalen Ressourcenpool befinden;
wobei der Ressourcenmanager ferner für folgende Vorgänge ausgelegt ist:

Überwachen eines Nutzungsstatus von Ressourcen im globalen Ressourcenpool; und
wenn eine Menge zuweisbarer Ressourcen im globalen Ressourcenpool kleiner als ein voreingestellter Schwellenwert ist, Einstellen des globalen Ressourcenpools auf den zentralisierten Modus, Zurückfordern nicht zugewiesener Ressourcen in den mindestens zwei lokalen Ressourcenpools im System und Platzieren der nicht zugewiesenen Ressourcen in den globalen Ressourcenpool; und
wenn die Menge zuweisbarer Ressourcen im globalen Ressourcenpool größer als der voreingestellte Schwellenwert ist, Einstellen des globalen Ressourcenpools auf den verteilten Modus, wobei der Ressourcenmanager eine spezifische Menge an Ressourcen einem lokalen Ressourcenpool zuweist, so dass die verbleibenden Ressourcen im System auf den globalen Ressourcenpool und den lokalen Ressourcenpool verteilt werden;

wobei der Ressourcenmanager ferner für folgende Vorgänge ausgelegt ist:

wenn sich der globale Ressourcenpool in einem verteilten Modus befindet, Zuweisen einer Ressource aus einem ersten lokalen Ressourcenpool, der der ersten CPU entspricht, an die erste CPU, wobei, wenn sich der globale Ressourcenpool im verteilten Modus befindet, der erste lokale Ressourcenpool eine zuweisbare Ressource aufweist;
wobei der Ressourcenmanager dafür ausgelegt ist, eine Menge zugewiesener Ressourcen oder eine Menge zurückgeforderter Ressourcen gemäß einem Ressourcenausgleichsalgorithmus zu bestimmen;

wobei im Ressourcenausgleichsalgorithmus eine Menge K von Ressourcen, die einem lokalen Ressourcenpool in der Abtastdauer zugewiesen werden, gemäß einem "Return-on-Investment"-Verhältnis-Modell erhalten wird, wobei für das "Return-on-Investment"-Verhältnis-Modell die folgende Beziehung gilt:

$$K_{n+1} = K_n - K_{n-1}/S_n - S_{n-1} * \left( {}^T\!/_{(T-t)} S_n - S_n \right) + K_n$$

wobei $S_n$ eine gewichtete Zeit ist, die von einer Ressourcenanwendungsanforderung für die Anforderung einer Ressource in der Abtastdauer verbraucht wird und unter Verwendung der folgenden Formel erhalten wird:

$$S_{n+1} = (1-r)(a_{n+1} + r\left[ {}^{S_n}\!/_{(1-r)} + r^{m-2} a_{n-m+2} \right])$$

und wobei:

die Zuweisung von Ressourcen in einem lokalen Ressourcenpool durch den Ressourcenmanager in einer Abtastperiode T überwacht wird, wobei die Abtastperiode T von einem Benutzer auf der Grundlage eines Bedarfs festgelegt wird;

$a_n$ eine Zeit ist, die die CPU für die Anforderung einer Ressource in einer n-ten Abtastperiode verbraucht;

m eine Abtastfenstergröße ist, wobei die Abtastfenstergröße eine Menge von Abtastperioden in einer kontinuierlichen Abtastzeit ist, wobei die Abtastfenstergröße m vom Benutzer auf der Grundlage eines Bedarfs eingestellt wird;

r eine Gewichtung zum Berechnen einer Zeit ist, die von jeder Ressourcenanwendungsanforderung zum Anfordern einer Ressource in einer kontinuierlichen Abtastperiode verbraucht wird, wobei r einen Wert von 0 < r < 1 hat, wobei die Gewichtung r auf der Grundlage eines Bedarfs des Benutzers so eingestellt wird, dass, wenn kürzlich abgetastete Daten vertrauenswürdiger sind, eine Gewichtung zum Berechnen einer verbrauchten Zeit größer ist;

t eine Dauer ist, die von einer CPU zum Anfordern einer Sperre einer Ressource in einer Abtastperiode verbraucht wird; und

der zeitlich gewichtete Verbrauch, der von einem Ressourcennutzer in einem ersten Abtastfenster erzeugt wird, $S_1=0$ ist; und eine Menge von Ressourcen, die in einem nullten Abtastfenster zugewiesen werden, $K_1=0$ ist und eine Menge von Ressourcen, die im ersten Abtastfenster zugewiesen werden, K2=0 ist.

2. Ressourcenmanager nach Anspruch 1, wobei der Ressourcenmanager ferner für folgenden Vorgang ausgelegt ist:

wenn die zuweisbare Ressource im ersten lokalen Ressourcenpool einen Bedarf der ersten CPU nicht erfüllen kann, Zuweisen, an den ersten lokalen Ressourcenpool, einer Ressource aus dem globalen Ressourcenpool, und dann Zuweisen einer Ressource aus dem ersten lokalen Ressourcenpool an die erste CPU.

3. Ressourcenmanager nach einem der Ansprüche 1 bis 2, wobei der Ressourcenmanager ferner für folgende Vorgänge ausgelegt ist:

Überwachen eines Nutzungsstatus von Ressourcen in den mindestens zwei lokalen Ressourcenpools; und wenn die Mengen zuweisbarer Ressourcen in den mindestens zwei lokalen Ressourcenpools kleiner als ein voreingestellter Wert sind und wenn sich der globale Ressourcenpool im verteilten Modus befindet, Zuweisen von Ressourcen aus dem globalen Ressourcenpool an die mindestens zwei lokalen Ressourcenpools.

4. Ressourcenmanager nach einem der Ansprüche 1 bis 2, wobei der Ressourcenmanager ferner für folgende Vorgänge ausgelegt ist:
wenn die Mengen zuweisbarer Ressourcen in den mindestens zwei lokalen Ressourcenpools größer als ein voreingestellter Wert sind, Zurückfordern einiger Ressourcen der zuweisbaren Ressourcen in den mindestens zwei lokalen Ressourcenpools und Platzieren der Ressourcen in den globalen Ressourcenpool.

5. Verfahren zur Ressourcenzuweisung in einem Multi-CPU-System, wobei das Multi-CPU-System einen Ressourcenmanager umfasst und der Ressourcenmanager Ressourcen im System in einen globalen Ressourcenpool und mindestens zwei lokale Ressourcenpools unterteilt, wobei die mindestens zwei lokalen Ressourcenpools in einer Eins-zu-Eins-Entsprechung mit CPUs stehen und das Verfahren umfasst:

Empfangen (201), durch den Ressourcenmanager, einer Ressourcenanwendungsanforderung, die von einer ersten CPU gesendet wird;

Bestimmen (203), durch den Ressourcenmanager, eines aktuellen Modus des globalen Ressourcenpools; und wenn sich der globale Ressourcenpool in einem zentralisierten Modus befindet, Zuweisen (205), durch den Ressourcenmanager, einer Ressource aus dem globalen Ressourcenpool an die erste CPU, wobei, wenn sich der globale Ressourcenpool im zentralisierten Modus befindet, zuweisbare Ressourcen im System sich im globalen Ressourcenpool befinden;

Überwachen, durch den Ressourcenmanager, eines Nutzungsstatus von Ressourcen im globalen Ressourcenpool; und

wenn eine Menge zuweisbarer Ressourcen im globalen Ressourcenpool kleiner als ein voreingestellter Schwellenwert ist, Einstellen, durch den Ressourcenmanager, des globalen Ressourcenpools auf den zentralisierten Modus, Zurückfordern nicht zugewiesener Ressourcen in den mindestens zwei lokalen Ressourcenpools im System und Platzieren der nicht zugewiesenen Ressourcen im globalen Ressourcenpool; und

wenn die Menge zuweisbarer Ressourcen im globalen Ressourcenpool größer als der voreingestellte Schwellenwert ist, Einstellen des globalen Ressourcenpools auf den verteilten Modus, wobei der Ressourcenmanager eine spezifische Menge an Ressourcen einem lokalen Ressourcenpool zuweist, so dass die verbleibenden Ressourcen im System auf den globalen Ressourcenpool und den lokalen Ressourcenpool verteilt werden; wobei das Verfahren ferner umfasst:

wenn sich der globale Ressourcenpool in einem verteilten Modus befindet, Zuweisen (207), durch den Ressourcenmanager, einer Ressource aus einem ersten lokalen Ressourcenpool, der der ersten CPU entspricht, an die erste CPU, wobei, wenn sich der globale Ressourcenpool im verteilten Modus befindet, der erste lokale Ressourcenpool eine zuweisbare Ressource aufweist;

Bestimmen, durch den Ressourcenmanager, einer Menge zugewiesener Ressourcen oder einer Menge zurückgeforderter Ressourcen gemäß einem Ressourcenausgleichsalgorithmus;

wobei im Ressourcenausgleichsalgorithmus eine Menge K von Ressourcen, die einem lokalen Ressourcenpool in der Abtastdauer zugewiesen werden, gemäß einem "Return-on-Investment"-Verhältnis-Modell erhalten wird, wobei für das "Return-on-Investment"-Verhältnis-Modell die folgende Beziehung gilt:

$$K_{n+1} = K_n - K_{n-1}/S_n - S_{n-1} * \left( \frac{T}{(T-t)} S_n - S_n \right) + K_n$$

wobei Sn eine gewichtete Zeit ist, die von einer Ressourcenanwendungsanforderung für die Anforderung einer Ressource in der Abtastdauer verbraucht wird und unter Verwendung der folgenden Formel erhalten wird:

$$S_{n+1} = (1-r)(a_{n+1} + r \left[ S_n/(1-r) + r^{m-2} a_{n-m+2} \right])$$

und wobei:

die Zuweisung von Ressourcen in einem lokalen Ressourcenpool durch den Ressourcenmanager in einer Abtastperiode T überwacht wird, wobei die Abtastperiode T von einem Benutzer auf der Grundlage eines Bedarfs festgelegt wird;

an eine Zeit ist, die die CPU für die Anforderung einer Ressource in einer n-ten Abtastperiode verbraucht;

m eine Abtastfenstergröße ist, wobei die Abtastfenstergröße eine Menge von Abtastperioden in einer kontinuierlichen Abtastzeit ist, wobei die Abtastfenstergröße m vom Benutzer auf der Grundlage eines Bedarfs eingestellt wird;

r eine Gewichtung zum Berechnen einer Zeit ist, die von jeder Ressourcenanwendungsanforderung zum Anfordern einer Ressource in einer kontinuierlichen Abtastperiode verbraucht wird, wobei r einen Wert von 0 < r < 1 hat, wobei die Gewichtung r auf der Grundlage eines Bedarfs des Benutzers so eingestellt wird, dass, wenn kürzlich abgetastete Daten vertrauenswürdiger sind, eine Gewichtung zum Berechnen einer verbrauchten Zeit größer ist;

t eine Dauer ist, die von einer CPU zum Anfordern einer Sperre einer Ressource in einer Abtastperiode verbraucht wird; und

der zeitlich gewichtete Verbrauch, der von einem Ressourcennutzer in einem ersten Abtastfenster erzeugt wird, $S_1=0$ ist; und eine Menge von Ressourcen, die in einem nullten Abtastfenster zugewiesen werden, $K_1=0$ ist und eine Menge von Ressourcen, die im ersten Abtastfenster zugewiesen werden, K2=0 ist.

**6.** Verfahren nach Anspruch 5, wobei das Verfahren ferner umfasst:
wenn die zuweisbare Ressource im ersten lokalen Ressourcenpool einen Bedarf der ersten CPU nicht erfüllen kann, Zuweisen (209), durch den Ressourcenmanager, einer Ressource aus dem globalen Ressourcenpool an den ersten lokalen Ressourcenpool und dann Zuweisen einer Ressource aus dem ersten lokalen Ressourcenpool an die erste CPU.

**7.** Verfahren nach einem der Ansprüche 5 bis 6, wobei das Verfahren ferner umfasst:

Überwachen, durch den Ressourcenmanager, eines Nutzungsstatus von Ressourcen in den mindestens zwei lokalen Ressourcenpools; und
wenn Mengen zuweisbarer Ressourcen in den mindestens zwei lokalen Ressourcenpools kleiner als ein voreingestellter Wert sind und wenn sich der globale Ressourcenpool im verteilten Modus befindet, Zuweisen, durch den Ressourcenmanager, von Ressourcen aus dem globalen Ressourcenpool an die mindestens zwei lokalen Ressourcenpools.

**8.** Verfahren nach einem der Ansprüche 5 bis 6, wobei das Verfahren ferner umfasst:
wenn Mengen zuweisbarer Ressourcen in den mindestens zwei lokalen Ressourcenpools größer als ein voreingestellter Wert sind, Zurückfordern, durch den Ressourcenmanager, einiger Ressourcen der zuweisbaren Ressourcen in den mindestens zwei lokalen Ressourcenpools und Platzieren der Ressourcen in den globalen Ressourcenpool.

## Revendications

**1.** Gestionnaire de ressources dans un système multi-CPU, le gestionnaire de ressources divisant des ressources dans le système en un groupe de ressources global et au moins deux groupes de ressources locaux, les au moins deux groupes de ressources locaux étant dans une correspondance biunivoque avec des CPU, et le gestionnaire de ressource étant configuré pour :

recevoir une demande d'application de ressources envoyée par une première CPU ;
déterminer un mode courant du groupe de ressources global ; et
quand un groupe de ressources global est dans un mode centralisé, attribuer une ressource à la première CPU à partir du groupe de ressources global, dans lequel quand le groupe de ressources global est dans le mode centralisé, les ressources pouvant être attribuées dans le système sont dans le groupe de ressources global ;
le gestionnaire de ressources étant en outre configuré pour :

surveiller un état d'utilisation de ressources dans le groupe de ressources global ; et
quand une quantité de ressources pouvant être attribuées dans le groupe de ressources global est inférieure à un seuil prédéfini, définir le groupe de ressources global sur le mode centralisé, récupérer des ressources non attribuées dans les au moins deux groupes de ressources locaux dans le système, et placer les ressources non attribuées dans le groupe de ressources global ; et
quand la quantité de ressources pouvant être attribuées dans le groupe de ressources global est supérieure au seuil prédéfini, définir le groupe de ressources global sur le mode distribué, dans lequel le gestionnaire de ressources attribue une quantité spécifique de ressources à un groupe de ressources local, de sorte que des ressources restant dans le système soient distribuées dans le groupe de ressources global et le groupe de ressources local ;

dans lequel le gestionnaire de ressources est en outre configuré pour :

quand le groupe de ressources global est dans un mode distribué, attribuer une ressource à la première CPU à partir d'un premier groupe de ressources local correspondant à la première CPU, dans lequel quand le groupe de ressources global est dans le mode distribué, le premier groupe de ressources local a une ressource pouvant être attribuée ;
le gestionnaire de ressources étant configuré pour déterminer une quantité de ressources attribuées ou une quantité de ressources récupérées en fonction d'un algorithme d'équilibrage de ressources ;

dans lequel, dans l'algorithme d'équilibrage de ressources, une quantité K de ressources qui sont attribuées à un groupe de ressources local dans la durée d'échantillonnage est obtenue en fonction d'un modèle de rapport de retour sur investissement, le modèle de rapport de retour sur investissement étant :

$$K_{n+1} = (K_n - K_{n-1})/(S_n - S_{n-1}) * \left(^{T}/_{(T-t)} S_n - S_n\right) + K_n;$$

dans lequel Sn est un temps pondéré consommé par une demande d'application de ressources pour demander une ressource dans une durée d'échantillonnage et obtenu à l'aide de la formule :

$$S_{n+1} = (1-r)\left(a_{n+1} + r\left[^{S_n}/_{(1-r)} + r^{m-2}a_{n-m+2}\right]\right);$$

et dans lequel :

une attribution de ressources dans un groupe de ressources local est surveillée par le gestionnaire de ressources dans une période d'échantillonnage T, la période d'échantillonnage T étant définie par un utilisateur sur la base d'une exigence ;

$a_n$ est un temps consommé par la CPU pour demander une ressource dans une énième période d'échantillonnage ;

m est une taille de fenêtre d'échantillonnage, la taille de fenêtre d'échantillonnage est une quantité de périodes d'échantillonnage dans un temps d'échantillonnage continu, la taille de fenêtre d'échantillonnage m est définie par l'utilisateur sur la base d'une exigence ;

r est une pondération pour calculer un temps consommé par chaque demande d'application de ressources pour demander une ressource dans une période d'échantillonnage continue, r ayant une valeur de 0 < r < 1, la pondération r étant définie sur la base d'une exigence de l'utilisateur de sorte que, quand une donnée récemment échantillonnée est plus fiable, une pondération pour calculer un temps consommé soit plus grande ;

t est une durée consommée par une CPU pour demander un blocage d'une ressource dans une période d'échantillonnage ; et

la consommation à pondération temporelle générée par un utilisateur de ressources dans une première fenêtre d'échantillonnage est Si = 0 ; et une quantité de ressources attribuées dans une fenêtre d'échantillonnage d'ordre zéro est $K_1$ = 0, et une quantité de ressources attribuées dans la première fenêtre d'échantillonnage est K2 = 0.

2. Gestionnaire de ressources selon la revendication 1, le gestionnaire de ressources étant en outre configuré pour : quand la ressource pouvant être attribuée dans le premier groupe de ressources local ne peut pas satisfaire à une exigence de la première CPU, attribuer une ressource au premier groupe de ressources local à partir du groupe de ressources global, puis attribuer une ressource à la première CPU à partir du premier groupe de ressources local.

3. Gestionnaire de ressources selon l'une quelconque des revendications 1 et 2, le gestionnaire de ressources étant en outre configuré pour :

surveiller un état d'utilisation de ressources dans les au moins deux groupes de ressources locaux ; et quand des quantités de ressources pouvant être attribuées dans les au moins deux groupes de ressources locaux sont inférieures à une valeur prédéfinie et quand le groupe de ressources global est dans le mode distribué, attribuer des ressources aux au moins deux groupes de ressources locaux à partir du groupe de ressources global.

4. Gestionnaire de ressources selon l'une quelconque des revendications 1 et 2, le gestionnaire de ressources étant en outre configuré pour : quand des quantités de ressources pouvant être attribuées dans les au moins deux groupes de ressources locaux sont supérieures à une valeur prédéfinie, récupérer certaines ressources des ressources pouvant être attribuées dans les au moins deux groupes de ressources locaux, et placer les ressources dans le groupe de ressources global.

5. Procédé d'attribution de ressources dans un système multi-CPU, dans lequel le système multi-CPU comprend un gestionnaire de ressources, et le gestionnaire de ressource divise des ressources dans le système en un groupe de ressources global et au moins deux groupes de ressources locaux, les au moins deux groupes de ressources locaux sont dans une correspondance biunivoque avec des CPU, et le procédé comprend :

la réception (201), par le gestionnaire de ressources, d'une demande d'application de ressources envoyée par une première CPU ;

la détermination (203), par le gestionnaire de ressources, d'un mode courant du groupe de ressources global ; et quand le groupe de ressources global est dans un mode centralisé, l'attribution (205), par le gestionnaire de ressources, d'une ressource à la première CPU à partir du groupe de ressources global, dans lequel quand le groupe de ressources global est dans le mode centralisé, les ressources pouvant être attribuées dans le système sont dans le groupe de ressources global ;

la surveillance, par le gestionnaire de ressources, d'un état d'utilisation de ressources dans le groupe de ressources global ; et

quand une quantité de ressources pouvant être attribuées dans le groupe de ressources global est inférieure à un seuil prédéfini, la définition, par le gestionnaire de ressources, du groupe de ressources global sur le mode centralisé, la récupération des ressources non attribuées dans les au moins deux groupes de ressources locaux dans le système, et le placement des ressources non attribuées dans le groupe de ressources global ; et

quand la quantité de ressources pouvant être attribuées dans le groupe de ressources global est inférieure au seuil prédéfini, la définition du groupe de ressources global sur le mode distribué, dans lequel le gestionnaire de ressources attribue une quantité spécifique de ressources à un groupe de ressources local, de sorte que les ressources restant dans le système soient distribuées dans le groupe de ressources global et le groupe de ressources local ;

dans lequel le procédé comprend en outre :

quand le groupe de ressources global est dans un mode distribué, l'attribution (207), par le gestionnaire de ressources, d'une ressource à la première CPU à partir d'un premier groupe de ressources local correspondant à la première CPU, dans lequel quand le groupe de ressources global est dans le mode distribué, le premier groupe de ressources local a une ressource pouvant être attribuée ;

la détermination, par le gestionnaire de ressources, d'une quantité de ressources attribuées ou d'une quantité de ressources récupérées en fonction d'un algorithme d'équilibrage de ressources ;

dans lequel, dans l'algorithme d'équilibrage de ressources, une quantité K de ressources qui sont attribuées à un groupe de ressources local dans la durée d'échantillonnage est obtenue en fonction d'un modèle de rapport de retour sur investissement, le modèle de rapport de retour sur investissement étant :

$$K_{n+1} = (K_n - K_{n-1})/(S_n - S_{n-1}) * (^T/_{(T-t)} S_n - S_n) + K_n;$$

dans lequel Sn est un temps pondéré consommé par une demande d'application de ressources pour demander une ressource dans une durée d'échantillonnage et obtenu à l'aide de la formule :

$$S_{n+1} = (1-r)\left(a_{n+1} + r\left[^{S_n}/_{(1-r)} + r^{m-2} a_{n-m+2}\right]\right);$$

et dans lequel :

une attribution de ressources dans un groupe de ressources local est surveillée par le gestionnaire de ressources dans une période d'échantillonnage T, la période d'échantillonnage T étant définie par un utilisateur sur la base d'une exigence ;

an est un temps consommé par la CPU pour demander une ressource dans une énième période d'échantillonnage ;

m est une taille de fenêtre d'échantillonnage, la taille de fenêtre d'échantillonnage est une quantité de périodes d'échantillonnage dans un temps d'échantillonnage continu, la taille de fenêtre d'échantillonnage m est définie par l'utilisateur sur la base d'une exigence ;

r est une pondération pour calculer un temps consommé par chaque demande d'application de ressources pour demander une ressource dans une période d'échantillonnage continue, r ayant une valeur de 0 < r < 1, la pondération r étant définie sur la base d'une exigence de l'utilisateur de sorte que, quand une donnée récemment échantillonnée est plus fiable, une pondération pour calculer un temps consommé soit plus grande ;

t est une durée consommée par une CPU pour demander un blocage d'une ressource dans une période d'échantillonnage ; et

la consommation à pondération temporelle générée par un utilisateur de ressource dans une première fenêtre d'échantillonnage est $S_1 = 0$ ; et une quantité de ressources attribuées dans une fenêtre d'échantillonnage d'ordre zéro est $K_1 = 0$, et une quantité de ressources attribuées dans la première fenêtre d'échantillonnage est $K_2 = 0$.

6. Procédé selon la revendication 5, le procédé comprenant en outre :
quand la ressource pouvant être attribuée dans le premier groupe de ressources local ne peut pas satisfaire à une exigence de la première CPU, l'attribution (209), par le gestionnaire de ressources, d'une ressource au premier groupe de ressources local à partir du groupe de ressources global, puis l'attribution d'une ressource à la première CPU à partir du premier groupe de ressources local.

7. Procédé selon l'une quelconque des revendications 5 et 6, le procédé comprenant en outre :

la surveillance, par le gestionnaire de ressources, d'un état d'utilisation de ressources dans les au moins deux groupes de ressources locaux ; et

quand des quantités de ressources pouvant être attribuées dans les au moins deux groupes de ressources locaux sont inférieures à une valeur prédéfinie et quand le groupe de ressources global est dans le mode distribué, l'attribution, par le gestionnaire de ressources, de ressources aux au moins deux groupes de ressources locaux à partir du groupe de ressources global.

8. Procédé selon l'une quelconque des revendications 5 et 6, le procédé comprenant en outre :
quand des quantités de ressources pouvant être attribuées dans les au moins deux groupes de ressources locaux sont supérieures à une valeur prédéfinie, la récupération, par le gestionnaire de ressources, de certaines ressources des ressources pouvant être attribuées dans les au moins deux groupes de ressources locaux, et le placement des ressources dans le groupe de ressources global.

FIG. 1

FIG. 2A

```
                                                    201
    ┌─────────────────────────────────┐
    │ A resource manager receives a   │
    │ resource application request    │
    │ sent by a first CPU             │
    └─────────────────────────────────┘
                    │
                    ▼                   203                              207
    ┌─────────────────────────────────┐      ┌────────────────────────────────────┐
    │ The resource manager determines │      │ When the global resource pool is in│
    │ a current mode of a global      │─────▶│ a distributed mode, the resource   │
    │ resource pool                   │      │ manager allocates a resource to the│
    └─────────────────────────────────┘      │ first CPU from a first local       │
                    │                         │ resource pool corresponding to the │
                    │           205           │ first CPU                          │
                    ▼                         └────────────────────────────────────┘
    ┌─────────────────────────────────┐                      │
    │ When the global resource pool   │                      │              209
    │ is in a centralized mode, the   │                      ▼
    │ resource manager allocates a    │      ┌────────────────────────────────────┐
    │ resource to the CPU from the    │      │ When a resource for allocation in a│
    │ global resource pool, that is,  │      │ local resource pool cannot meet a  │
    │ the resource manager allocates  │      │ requirement of a CPU, the resource │
    │ a resource to the first CPU     │      │ manager allocates a resource to the│
    │ from the global resource pool   │      │ local resource pool from the global│
    └─────────────────────────────────┘      │ resource pool, and then allocates a│
                                             │ resource to the CPU from the local │
                                             │ resource pool                      │
                                             └────────────────────────────────────┘
```

FIG. 2B

FIG. 3

**EP 3 483 730 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016147648 A1
- US 2008034370 A1
- US 7231504 B2